# EUROPEAN PATENT SPECIFICATION

(11) **EP 4 127 610 B1**
(45) Date of publication and mention of the grant of the patent: **29.07.2026**
(21) Application number: 21825925.7
(22) Date of filing: 07.06.2021
(51) Int. Cl.: G01D 11/24, G01L 19/00, G01L 19/14, G01K 1/08, G01F 1/36, G01F 1/44, G01F 1/74, G01F 15/14, G01K 1/10

(54) **SUBSEA MULTIVARIABLE TRANSMITTER**
MULTIVARIABLER UNTERWASSERSENDER
ÉMETTEUR MULTIVARIABLE SOUS-MARIN

(30) Priority: 17.06.2020 US 202016903753
(43) Date of publication of application: 08.02.2023
(73) Proprietor: Rosemount Inc., Shakopee, MN 55379 (US)
(72) Inventor: STREI, David M., Waconia, Minnesota 55387 (US); SCHMELING, Paul, Burnsville, Minnesota 55337 (US)
(74) Representative: Meissner Bolte Partnerschaft mbB
(86) International application number: PCT/US2021/036169
(87) International publication number: WO 2021/257306

(56) References cited:
- EP-B1- 0 720 732
- US-A1- 2004 177 703
- US-A1- 2005 038 172
- US-A1- 2008 053 242
- US-A1- 2009 293 625
- US-A1- 2011 301 867
- US-A1- 2012 006 119
- US-A1- 2015 082 903
- US-A1- 2015 082 903
- US-A1- 2016 202 095
- US-A1- 2016 202 095
- US-A1- 2018 106 648
- US-B2- 10 260 980

## Description

### BACKGROUND

Industrial process control systems are used to monitor and control industrial processes that produce or transfer fluids or the like. In such systems, it is typically important to measure "process variables" such as temperatures, pressures, flow rates, and others. Process variable transmitters are used to measure such process variables and transmit information related to the measured process variable back to a central location such as a central control room.

A process variable transmitter generally includes or is coupled to a transducer or sensor that responds to a process variable. A process variable generally refers to a physical or chemical state of matter or conversion of energy. Examples of process variables include pressure, temperature, flow, conductivity, pH and other properties. Pressure is considered to be a basic process variable that can be used to measure flow, level and even temperature.

In order to measure a fluid flow, it is often necessary to determine a number of process variables, such as process fluid temperature, process fluid static or line pressure, and process fluid differential pressure across a partial obstruction, such as an orifice plate or the like. In such instances, multivariable transmitters are commonly used to measure and monitor a plurality of process variables in order to provide calculated parameters, such a process fluid flow.

Multivariable process fluid transmitters generally include a differential pressure sensor as well as a line pressure sensor and/or a process fluid temperature sensor. The differential pressure sensor responds to a difference in pressure between two process fluid inputs. The line pressure sensor responds to the absolute or gauge pressure in one of the fluid inputs. The process fluid temperature sensor responds to the temperature of the process fluid with an electrical indication, such as a voltage or resistance, that is related to the temperature of the process fluid. Multivariable process fluid transmitters are used in a variety of flow measurement applications including, without limitation, single phase flowmeters, multiphase flowmeters, and wet-gas flowmeters.

Single phase flowmeters measure any type of single fluid systems, such as oil, water, chemical injection fluids. Typically, these applications only include a differential pressure sensor, but incorporating a multi-variable transmitter would enable fully-compensated flow measurements (flow measurements compensated for density differences driven by static pressure or temperature changes). Multiphase flowmeters measure flow of one or more process fluids with different phases (i.e. saturated steam/water). Wet-gas flowmeters are flowmeters used for measuring natural gas/water combinations. These flowmeters can use different primary elements than a multiphase flowmeter, but still use a differential pressure measurement in combination with a static pressure measurement and a temperature measurement.

High static pressure environments, such as subsea applications, can provide significant challenges for process fluid transmitters. In such environments, when a multiphasic flow measurement or other similar measurement is desired which requires multiple process variables, multiple process fluid transmitters are required. Providing such transmitters involves considerable expense and complexity. For example, subsea multiphase flowmeters typically incorporate many sensor inputs. The three primary sensor inputs for measuring process fluid flow are differential pressure (DP), line pressure (LP), and temperature. These three sensor inputs are typically provided by two different devices; a differential pressure transmitter and a pressure-temperature (PT) transmitter. The differential pressure transmitter is typically coupled to the flowmeter using two flanged connections and the PT transmitter is coupled to the flowmeter using another flange connection. These flanges are large in order to operate under the extreme process pressures and in the crushing pressure of subsea environments. For example, the flanges are so large and heavy that they drive the final size of the multiphase flowmeter.

Since differential pressure and process temperature are critical inputs for flow calculation, the subsea process industry has generally required these to be redundant measurements. This is at least partially due to the cost and complexity of servicing equipment in the subsea environment. Thus, redundant DP measurements are made from two separate transmitters. However, the PT transmitter usually provides redundancy by employing a pair of temperature sensors. Such a device is termed a dual-PT or PTPT device. While embodiments will generally be described with respect to a subsea multiphase flowmeter, it is noted that embodiments are applicable to other types of flowmeters as well.

### SUMMARY

A multivariable transmitter is provided for measuring multiple process fluid variables according to claim 1.

### BRIEF DESCRIPTION OF THE DRAWINGS

FIG. 1 is a diagrammatic view of a known subsea multi-phase flowmeter.
FIG. 2 is a diagrammatic cross-sectional view of a multivariable subsea transmitter in accordance with an embodiment of the present invention.
FIG. 3 is a diagrammatic view of a subsea multiphase flowmeter using a multivariable transmitter measuring line pressure, process fluid temperature, and differential pressure, in accordance with an embodiment of the present invention.
FIG. 4 illustrates a flow conduit in which the temperature sensors are mounted in accordance with an embodiment of the present invention.
FIG. 5 illustrates a temperature sensor probe mounted to or installed in a remote seal.

### DETAILED DESCRIPTION OF ILLUSTRATIVE EMBODIMENTS

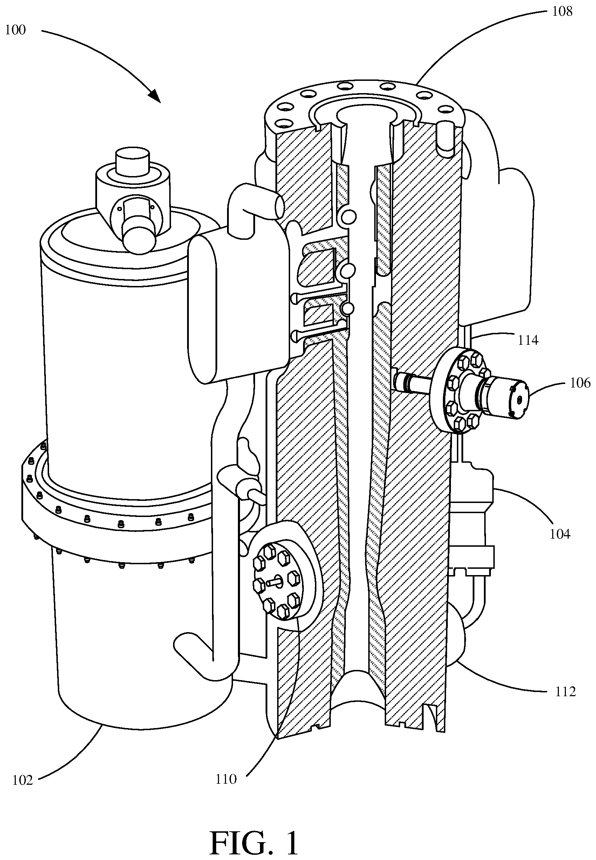

FIG. 1 is a diagrammatic view of a known subsea multi-phase flowmeter system 100, which generally includes a flow computer 102 that is communicatively coupled to a pair of differential pressure transmitters, one of which is shown at reference numeral 104, and a PT or PTPT transmitter as shown at reference numeral 106. The flow conduit through which the process fluid flows is shown in partial cross section at reference numeral 108. Each differential pressure transmitter 104 is coupled to a pair of remote seal flanges 110, 112. There are requisite mounting flanges for each of the two differential pressure transmitters as well as for the PT transmitter. Further, conduit 114 is used to electrically connect the differential pressure and PT transmitters to flow computer 102. Conduit 114 must generally be shaped and welded to route the wires to each process device. In order to operate in the crushing pressure of subsea environments, the flanges required for flowmeter 100 are relatively massive. For example, each process penetration requires a large API type 6B or 6BX flange.

In accordance with embodiments provided herein, a subsea multivariable system is provided that measures differential pressure, absolute pressure, and process temperature using two process penetrations rather than three. Reducing the number of process penetrations will eliminate a potential process leak path and thereby improve the safety of the flowmeter. Further, eliminating an extra measurement device will also reduce the size and weight of the flowmeter by approximately up to 22.7kg (50 pounds). Further still, as will be described below, some embodiments provided herein can employ redundant process temperatures measurements using two dual temperature elements, such as RTDs, in the same temperature sensor thus improving measurement redundancy and reliability.

Some efforts in this area have already been provided in the form of U.S. Patent No. 9,234,776 assigned to the assignee of the present application. This patent teaches the utilization of a line pressure sensor in combination with a differential pressure sensor and temperature measurement ability in a subsea transmitter. Accordingly, at least some embodiments described herein may be considered improvements to the aforementioned U.S. Patent. The structure described in the '776 incorporates a circuit card assembly that has the ability to measure a 4-wire RTD temperature sensor. Embodiments provided herein generally set forth a non-invasive process fluid temperature measurement regime in combination with a very robust coupling of the temperature sensor to the multivariable transmitter.

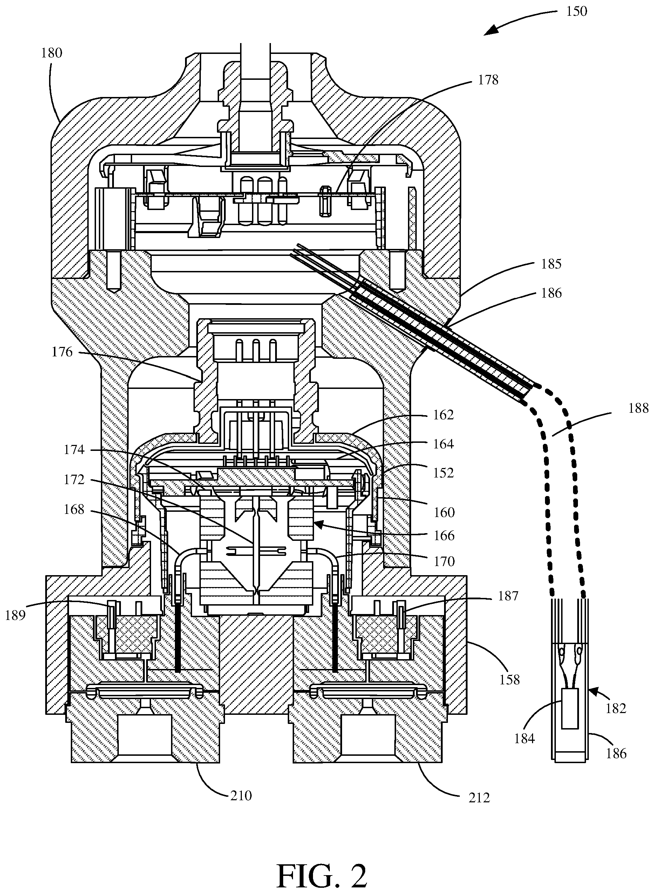

FIG. 2 is a diagrammatic cross-sectional view of a multivariable subsea transmitter in accordance with an embodiment of the present invention. Transmitter 150 bears a number of similarities to the multivariable process fluid transmitter set forth in the '776 patent. In fact, the pressure sensing portion 152 of transmitter 150 can be the same as that described in the '776 patent. Pressure sensing module 152 includes a lower portion 158 that, is constructed from a material selected from the group consisting of alloy C276, Inconel Alloy 625, and alloy C-22, which are suitable for immersion in saltwater and other corrosive materials. Examples of other corrosive materials include, without limitation, oil, fresh water, and corrosive chemicals.

Examples of materials that are suitable for immersion in saltwater and other corrosive materials include alloy C276 available from Haynes International Inc., of Kokomo, Indiana under the trade designation Hastelloy C276, Inconel Alloy 625, available from the Special Metals families of companies of New Hartford, New York; and alloy C-22 available from Haynes International. Of particular interest is alloy C276 which has the following chemical composition (by percentage weight): Molybdenum 15.0-17.0; Chromium 14.5-16.5; Iron 4.0-7.0; Tungsten 3.0-4.5; Cobalt 2.5 maximum, Manganese 1.0 maximum; Vanadium 0.35 maximum; Carbon 0.01 maximum; Phosphorous 0.04 maximum; Sulfur 0.03 maximum; Silicon 0.08 maximum; and balance Nickel.

Base portion 158 is coupled to sidewall 160 and endcap 162 to define a chamber 164 therein. Differential pressure sensor 166 is disposed in chamber 164 and has a pair of differential pressure sensor inputs 168, 170 that convey process fluid pressure to deflectable diaphragm 172, which has an electrical characteristic, such as capacitance or resistance, that varies with diaphragm deflection. The electrical characteristic is measured, or otherwise transduced, by circuitry 174 disposed proximate sensor 166. Circuitry 174 also conditions the measurement for transmission through electrical connection point 176. Circuitry 174 may include a microprocessor as well as a process communication module for communicating over a process communication loop or segment. Examples of such process communication include the Highway Addressable Remote Transducer (HART^{®}) Protocol or the FOUNDATION^{™} Fieldbus Protocol. Circuitry 174 is coupled to output circuit card 178 which is mounted within cover 180. Output circuit board 178 is configured to convey process measurements to remote circuitry, such as a flow computer 102. Additionally, output circuit board 178 also includes one or more inputs for coupling the multivariable transmitter with one or more temperature sensors. As shown in FIG. 2, a temperature sensor probe 182 is coupled to housing 185 via a suitable high-pressure coupling, such as a weld 186.

The example shown in FIG. 2 provides a pair of line pressure sensors 187, 189 operably coupled to the fluid pressure and electrically coupled to circuitry 174. In this way, transmitter 150 not only measures differential pressure directly using differential pressure sensor 166 but may also measure line pressure directly using one or more of line pressure sensors 187, 189. Further, any difference in line pressure sensor measurements can be compared with the measured differential pressure, from differential pressure sensor 166, to provide redundancy and/or diagnostics. Each of line pressure sensors 187, 189 can be formed of any suitable pressure sensing structure including that disclosed in U.S. Patent 6,079,276.

FIG. 2 illustrates one way in which a temperature sensor is incorporated into the multivariable subsea transmitter in accordance with an embodiment of the present invention. Temperature sensor 182 is constructed of mineral insulated (MI) cable 188 with a temperature sensitive element 184 disposed at a distal end thereof. Element 184 can be any suitable element having a characteristic such as resistance or voltage that changes with temperature. For example, element 184 can be a thermocouple, thermistor, RTD, or other suitable sensing element. In a preferred embodiment, element 184 is an RTD element. The RTD element can be a two-wire, three-wire or four-wire RTD element. Element 184 can also be a single element or dual element type. Thus, if element 184 is a dual element, four-wire configuration, MI cable 188 will convey eight distinct conductors.

These temperature sensors are available with subsea compatible housings constructed from a material selected from the group consisting of C276, Inconel , and alloy C-22 that are suitable for direct immersion in saltwater and other corrosive materials. The MI cable 188 for temperature sensor 182 is welded, as shown, into the housing 185 of multivariable transmitter 150 at weld 186. The individual conductors of the MI cable 188 are either directly soldered into output circuit card 178 of multivariable transmitter 150 or may employ a flexible cable or other intermediary to electrically couple to output circuit card 178.

Embodiments provided herein generally employ a single or dual element RTD 184 that is thermally coupled to process fluid without requiring an additional process penetration. There are several options for where the temperature sensor itself may be installed. However, such installations generally mount the temperature sensor without generating a process penetration and thus the associated high-pressure seal required. Since a process penetration is not required to measure temperature, the large flange connections used for pressure sensors are not required, further reducing the size and increasing the reliability of the system.

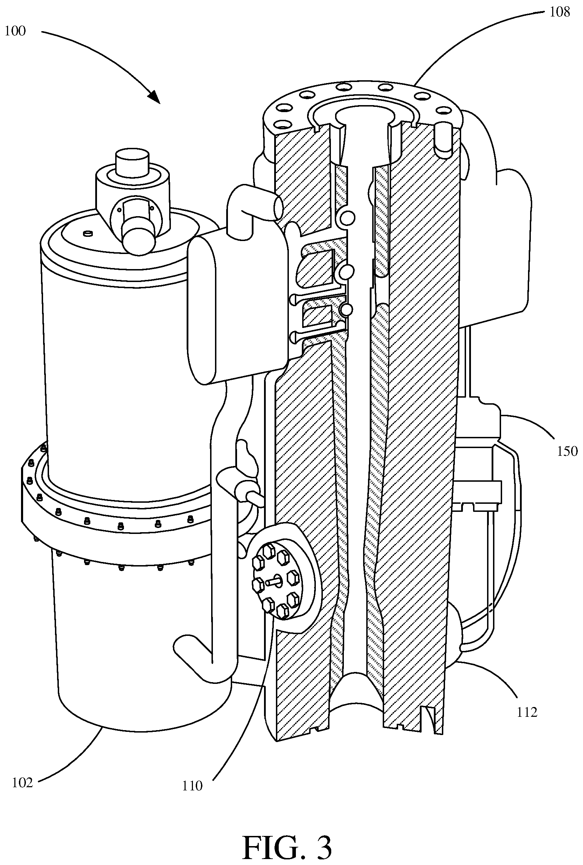

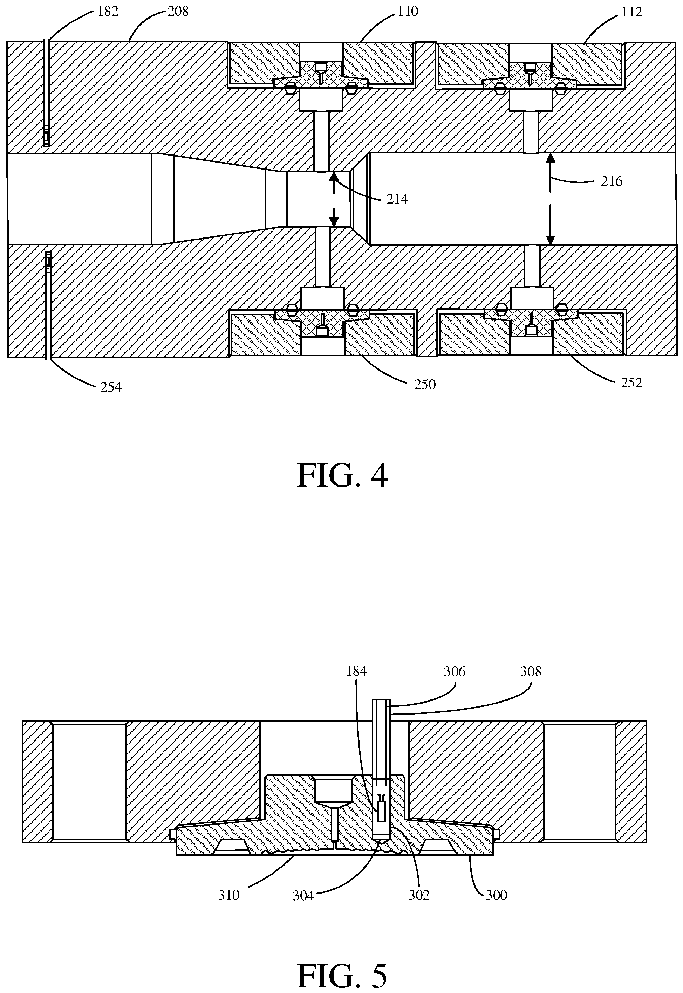

FIG. 3 is a diagrammatic view of a subsea multiphase flowmeter using a multivariable transmitter measuring line pressure, process fluid temperature, and differential pressure, in accordance with an embodiment of the present invention. Contrasting the subsea multiphase flowmeter illustrated in FIG. 3 with that shown in FIG. 1, it is apparent that embodiments of the present invention do not employ a PTPT or dual PT transmitter. Instead, multivariable transmitter 150 is illustrated. Note, the temperature sensor portion of the multivariable transmitter is not shown in FIG. 3, but is illustrated diagrammatically in FIG. 4. The MI cable portion of the temperature sensor can be made in various lengths and bent during the installation of the temperature sensor.

FIG. 4 illustrates a flow conduit 208, which is similar to flow conduit 108 (shown in FIG. 1) with the exception of the manner in which the temperature sensors are mounted. As shown in FIG. 4, first and second remote seals 110, 112, are coupled to flow conduit 208 at respective process fluid penetrations and convey process pressure to process pressure inlets 210, 212, respectively, of multivariable transmitter 150 (shown in FIG. 2). Each of remote seals 110, 112 is coupled to the process fluid pressure at locations or process fluid penetrations where the diameter of the flow conduit is different than the other. For example, remote seal 110 is coupled to flow conduit 208 at a location having a relatively smaller diameter 214, while remote seal 112 is coupled to flow conduit at location 216 having a relatively larger diameter 216. The difference in measured pressure at the two locations in conjunction with knowledge of the different flow conduit diameters, provides an indication of process fluid flow through flow conduit 208 when coupled with knowledge of the process fluid temperature.

As shown in FIG. 4, a temperature sensor probe 182 is mounted directly within process fluid conduit 208 and is coupled to transmitter 150 as shown in FIG. 2. For redundancy, remote seals 250, 252, and second temperature sensor probe 254 are also shown in FIG. 4. These redundant remote seals and temperature sensor probes are coupled to a second subsea multivariable transmitter, preferably identical to transmitter 150 shown in FIG. 2. In this way, an entirely redundant subsea multivariable transmitter system is provided that measures line pressure, differential pressure, and process fluid temperature.

As shown in FIG. 4, the temperature sensor probes 182, 254 may be mounted in flow tube 208, either directly or in a welded-in thermowell that extends into the process fluid conduit or, in some embodiments, into the flow itself. Moreover, each temperature sensor probe 182, 254, may include dual RTD elements for added redundancy, where each connected element is coupled to its respective subsea multivariable transmitter.

While the embodiment described with respect to FIG. 4 provides temperature probes mounted directly within the subsea flow conduit, is also expressly contemplated that the temperature sensing probes may be mounted into or coupled to the remote seals used for differential pressure/line pressure measurements.

FIG. 5 is a diagrammatic view of a temperature sensor probe mounted to and disposed within a remote seal in accordance with an embodiment of the present invention. As shown in FIG. 5, remote seal 300 bears some similarities to remote seals 110, 112, 250, 252. However, remote seal 300 includes a bore 302 that receives temperature measurement probe 304 containing RTD element 184. As shown, the distal end of the temperature measurement probe is positioned proximate isolation diaphragm 310 of the remote seal. MI cable 306 extends to housing 185 of multivariable transmitter 150 (shown in FIG. 2) within a suitable metallic sheath, 308 formed of a metal that is suitable for direct immersion in saltwater, such as C276 or Inconel. This metal is welded to housing 185 or coupled thereto with an alternate suitably robust coupling technique. Accordingly, remote seal 300 is configured to not only provide an indication of process fluid pressure, via diaphragm 310 and a fill fluid (not shown) conveying the pressure to a differential pressure transmitter, seal 300 is also configured to provide an indication of process fluid temperature, in accordance with an embodiment of the present invention. Thus, seal 300 can be used for differential/line pressure measurements as well as process fluid temperature measurements.

Although the present invention has been described with reference to preferred embodiments, workers skilled in the art will recognize that changes may be made in form and detail without departing from the scope of the invention, which is defined by the appendend claims. .

## Claims

1. A multivariable transmitter (150) for measuring multiple process fluid variables, the multivariable transmitter comprising:
a metal housing (158, 185, 180), wherein a housing lower portion (158) is constructed from a material selected from the group consisting of C276, Inconel, and alloy C-22;
a differential pressure sensor (166) disposed within the metal housing (158),
a line pressure sensor (187, 189) disposed within the metal housing (158),
measurement circuitry (174) operably coupled to the differential pressure sensor (166) and the line pressure sensor (187, 189) to provide differential pressure and line pressure outputs;
a temperature probe (182) having a mineral-insulated (MI) cable (188) and an outer surface constructed from a material selected from the group consisting of C276, Inconel, and alloy C-22; and
wherein the temperature probe i (182) is electrically coupled to measurement circuitry (174)
within the metal housing (185) and is physically coupled to the metal housing (185) via a high-pressure coupling (186).

2. The multivariable transmitter of claim 1, wherein the high pressure coupling between the temperature probe and the housing is a weld.

3. The multivariable transmitter of claim 1, wherein the temperature probe includes an RTD temperature sensitive element (184).

4. The multivariable transmitter of claim 3, wherein the RTD temperature sensitive element (184) is a 4-wire RTD.

5. The multivariable transmitter of claim 3, wherein the RTD temperature sensitive element (184) is a dual element type.

6. The multivariable transmitter of claim 1, wherein the temperature probe has a distal end coupled to structure in contact with process fluid.

7. The multivariable transmitter of claim 6, wherein the structure is a flow tube.

8. The multivariable transmitter of claim 7, wherein the distal end is physically isolated from, but thermally coupled to the process fluid.

9. The multivariable transmitter of claim 6, wherein the structure is a remote seal (300).

10. The multivariable transmitter of claim 9, wherein the distal end is disposed proximate an isolation diaphragm (310) of the remote seal (300).

11. The multivariable transmitter of claim 1, wherein the transmitter is configured to provide a flow output indicative of a flow of a single phase fluid.

12. The multivariable transmitter of claim 1, wherein the transmitter is configured to provide a flow output indicative of a flow of a multiphasic fluid.

## Patentansprüche

1. Multivariabler Messumformer (150) zum Messen mehrerer Prozessfluidvariablen, der multivariable Messumformer umfassend:
ein Metallgehäuse (158, 185, 180), wobei ein unterer Teil des Gehäuses (158) aus einem Material ausgewählt aus der Gruppe bestehend aus C276, Inconel und der Legierung C-22 hergestellt ist;
einen Differenzdrucksensor (166), der innerhalb des Metallgehäuses (158) angeordnet ist;
einen Leitungsdrucksensor (187, 189), der innerhalb des Metallgehäuses (158) angeordnet ist;
eine Messschaltung (174), die funktionsfähig mit dem Differenzdrucksensor (166) und dem Leitungsdrucksensor (187, 189) gekoppelt ist, um Differenzdruck- und Leitungsdruckausgaben bereitzustellen;
eine Temperatursonde (182) mit einem mineralisolierten (MI) Kabel (188) und einer Außenfläche, die aus einem Material ausgewählt aus der Gruppe bestehend aus C276, Inconel und der Legierung C-22 hergestellt ist; und
wobei die Temperatursonde (182) elektrisch mit der Messschaltung (174) innerhalb des Metallgehäuses (185) gekoppelt ist und physikalisch über eine Hochdruckkupplung (186) mit dem Metallgehäuse (185) gekoppelt ist.

2. Multivariabler Messumformer nach Anspruch 1, wobei die Hochdruckkupplung zwischen der Temperatursonde und dem Gehäuse eine Schweißverbindung ist.

3. Multivariabler Messumformer nach Anspruch 1, wobei die Temperatursonde ein temperaturempfindliches RTD-Element (184) umfasst.

4. Multivariabler Messumformer nach Anspruch 3, wobei das temperaturempfindliche RTD-Element (184) ein 4-Draht-RTD ist.

5. Multivariabler Messumformer nach Anspruch 3, wobei das temperaturempfindliche RTD-Element (184) vom Dualelementtyp ist.

6. Multivariabler Messumformer nach Anspruch 1, wobei die Temperatursonde ein distales Ende aufweist, das mit einer mit dem Prozessfluid in Kontakt stehenden Struktur gekoppelt ist.

7. Multivariabler Messumformer nach Anspruch 6, wobei die Struktur ein Strömungsrohr ist.

8. Multivariabler Messumformer nach Anspruch 7, wobei das distale Ende physikalisch von dem Prozessfluid isoliert, aber thermisch mit diesem gekoppelt ist.

9. Multivariabler Messumformer nach Anspruch 6, wobei die Struktur ein Druckmittler (300) ist.

10. Multivariabler Messumformer nach Anspruch 9, wobei das distale Ende in der Nähe einer Isolationsmembran (310) des Druckmittlers (300) angeordnet ist.

11. Multivariabler Messumformer nach Anspruch 1, wobei der Messumformer konfiguriert ist, eine Durchflussausgabe zu liefern, die einen Durchfluss eines einphasigen Fluids anzeigt.

12. Multivariabler Messumformer nach Anspruch 1, wobei der Messumformer konfiguriert ist, eine Durchflussausgabe zu liefern, die einen Durchfluss eines mehrphasigen Fluids anzeigt.

## Revendications

1. Transmetteur multivariable (150) destiné à mesurer plusieurs variables de fluide de processus, le transmetteur multivariable comprenant :
un boîtier métallique (158, 185, 180), dans lequel une partie inférieure de boîtier (158) est constituée d'un matériau choisi parmi le groupe comprenant le C276, l'Inconel et l'alliage C-22 ;
un capteur de pression différentielle (166) disposé à l'intérieur du boîtier métallique (158),
un capteur de pression de ligne (187, 189) disposé à l'intérieur du boîtier métallique (158),
un circuit de mesure (174) couplé de manière fonctionnelle au capteur de pression différentielle (166) et au capteur de pression de ligne (187, 189) pour fournir des sorties de pression différentielle et de pression de ligne ;
une sonde de température (182) comportant un câble à isolation minérale (MI) (188) et une surface extérieure constituée d'un matériau choisi parmi le groupe comprenant le C276, l'Inconel et l'alliage C-22 ; et
dans lequel la sonde de température (182) est couplée électriquement au circuit de mesure (174) à l'intérieur du boîtier métallique (185) et est physiquement couplée au boîtier métallique (185) via un raccord haute pression (186).

2. Transmetteur multivariable selon la revendication 1, dans lequel le raccord haute pression entre la sonde de température et le boîtier est une soudure.

3. Transmetteur multivariable selon la revendication 1, dans lequel la sonde de température inclut un élément sensible à la température RTD (184).

4. Transmetteur multivariable selon la revendication 3, dans lequel l'élément sensible à la température RTD (184) est un RTD à 4 fils.

5. Transmetteur multivariable selon la revendication 3, dans lequel l'élément sensible à la température RTD (184) est du type à double élément.

6. Transmetteur multivariable selon la revendication 1, dans lequel la sonde de température a une extrémité distale couplée à une structure en contact avec le fluide de processus.

7. Transmetteur multivariable selon la revendication 6, dans lequel la structure est un tube de débit.

8. Transmetteur multivariable selon la revendication 7, dans lequel l'extrémité distale est physiquement isolée du fluide de processus, mais couplée thermiquement à celui-ci.

9. Transmetteur multivariable selon la revendication 6, dans lequel la structure est un joint à distance (300).

10. Transmetteur multivariable selon la revendication 9, dans lequel l'extrémité distale est disposée à proximité d'une membrane d'isolation (310) du joint à distance (300).

11. Transmetteur multivariable selon la revendication 1, dans lequel le transmetteur est configuré pour fournir une sortie de débit indicative d'un débit d'un fluide monophasique.

12. Transmetteur multivariable selon la revendication 1, dans lequel le transmetteur est configuré pour fournir une sortie de débit indicative d'un débit d'un fluide multiphasique.
